# EUROPÄISCHE PATENTSCHRIFT

(11) **EP 3 377 871 B1**
(45) Veröffentlichungstag und Bekanntmachung des Hinweises auf die Patenterteilung: **10.01.2024**
(21) Anmeldenummer: 16798222.2
(22) Anmeldetag: 21.11.2016
(51) Int. Cl.: G01M 17/007, G01M 13/02

(54) **STEUEREINHEIT MIT PRÜFMODUS FÜR EIN FAHRZEUG UND VERFAHREN UND PRÜFSTAND ZUM DURCHFÜHREN EINES PRÜFVERSUCHS FÜR EINEN PRÜFLING**
CONTROL UNIT HAVING A TEST MODE FOR A VEHICLE, AND METHOD AND TEST BENCH FOR PERFORMING A BENCH TEST FOR A TEST SPECIMEN
UNITÉ DE COMMANDE À MODE D'ESSAI POUR UN VÉHICULE ET PROCÉDÉ ET BANC D'ESSAI POUR LA MISE EN OEUVRE D'UN ESSAI SUR UN ÉQUIPEMENT À TESTER

(30) Priorität: 19.11.2015 AT 509872015
(43) Veröffentlichungstag der Anmeldung: 26.09.2018
(73) Patentinhaber: AVL List GmbH, 8020 Graz (AT)
(72) Erfinder: MERL, Reinhard, 8111 Gratwein-Straßengel (AT)
(74) Vertreter: Patentanwälte Pinter & Weiss OG
(86) Internationale Anmeldenummer: PCT/EP2016/078322
(87) Internationale Veröffentlichungsnummer: WO 2017/085318

(56) Entgegenhaltungen:
- DE-A1- 10 131 317
- DE-A1-102005 054 735
- US-A- 5 023 791
- US-A1- 2013 211 691

## Beschreibung

Die gegenständliche Erfindung betrifft ein Verfahren zum Durchführen eines Prüfversuchs auf einem Prüfstand für einen Prüfling, wobei am Prüfling zumindest ein Messsensor angeordnet ist, der Sensorwerte einer Messgröße erfasst, die einer Steuereinheit des Prüflings zugeführt werden und in der die erfassten Sensorwerte der Messgröße in Abhängigkeit einer Plausibilisierung der erfassten Sensorwerte der Messgröße zum Steuern einer Funktion des Prüflings verarbeitet werden. Weiters betrifft die Erfindung einen entsprechenden Prüfstand zum Durchführen des Verfahrens.

In der Entwicklung von Fahrzeugen oder Fahrzeugkomponenten kommen oftmals Antriebsstrangprüfstände oder Prüfstände für Gesamtfahrzeuge zum Einsatz. Bei einem Antriebsstrang wird der Antriebsstrang am Prüfstand angeordnet und mit einer oder mehreren Belastungsmaschinen (Dynamometer) verbunden. Das Antriebsaggregat des Antriebsstranges, z.B. ein Verbrennungsmotor und/oder ein Elektromotor, arbeitet dann am Prüfstand gegen die Belastungsmaschine, um verschiedene Belastungszustände zu testen. Ein solcher Antriebsstrangprüfstand ist beispielsweise aus der DE 10 2008 041 883 A1 bekannt. Ein Prüfstand für ein Gesamtfahrzeug kann ein herkömmlicher Rollenprüfstand sein, bei dem die angetriebenen Fahrzeugräder auf Prüfrollen, die von einer Belastungsmaschine angetrieben werden, angeordnet sind. Ein solcher klassischer Rollenprüfstand ist z.B. aus der DE 100 51 353 A1 oder der WO 2009/121805 A1 bekannt. Es sind aber auch Prüfstände bekannt, insbesondere für Allradfahrzeuge, wo die Fahrzeugräder entfernt werden und an den Radnaben direkt, oder über spezielle Prüfräder, Belastungsmaschinen befestigt werden. Ein solcher Prüfstand ist beispielsweise aus der DE 10 2010 017 198 A1 oder der AT 512 428 B1 bekannt. Auf solchen Prüfständen kann eine reale Straßenfahrt des Fahrzeugs in Form eines Prüfversuchs sehr realitätsnah nachgebildet werden, um ein bestimmtes Verhalten des Fahrzeugs zu prüfen.

In modernen Fahrzeugen kommt in der Regel ein Verbund von Steuergeräten zum Einsatz, die verschiedene Funktionen des Fahrzeugs überwachen und steuern. Die Steuergeräte sind dabei über einen Fahrzeugbus, wie ein CAN-Bus, miteinander verbunden und tauschen untereinander auch Daten, wie beispielsweise Mess- oder Steuergrößen, aus. Hierbei kann es auch vorkommen, dass ein erstes Steuergerät von einem zweiten Steuergerät erhaltene Mess- oder Steuergrößen plausibilisiert, gegebenenfalls auch mit weiteren erhaltenen Mess- und/oder Steuergrößen. Erscheinen die erhaltenen Mess- oder Steuergrößen nicht plausibel wird ein Fehlerzustand eingenommen, der normalerweise nur einen eingeschränkten Betrieb des Fahrzeugs ermöglicht. Auf einem Prüfstand ist es aber oftmals so, dass nicht alle benötigten oder erwarteten Mess- oder Steuergrößen verfügbar oder plausibel sind. Ein Beispiel dafür ist, wenn nicht alle Achsen des Fahrzeugs angetrieben werden, wie es beispielsweise oftmals auf einem Rollenprüfstand der Fall ist. Viele Steuergeräte überwachen jedoch mit diversen Messsensoren Messgrößen aller Fahrzeugachsen. Wird dabei eine rotierende und eine stillstehende Achse detektiert, was nicht plausibel ist, dann führt das in Regelfall zu einem Fehlerzustand, der normalerweise nur einen eingeschränkten Betrieb des Fahrzeugs ermöglicht.

Auf einem Prüfstand ist ein solcher Fehlerzustand im Normalfall unerwünscht, da am Prüfstand ja die normale Funktionalität des Fahrzeugs getestet werden soll.

Um dem vorzubeugen ist z.B. schon bekannt, die Steuergeräte des Fahrzeugs in einen speziellen Prüfmodus zu schalten, in dem bestimmte Steuergeräte deaktiviert werden oder Messgrößen bestimmter im Fahrzeug verbauter Sensoren ignoriert werden. Die DE 10 2007 025 125 B3 beschreibt z.B. einen Rollenmodus bei dem eine Wankstabilisierungssteuereinrichtung ausgeschaltet wird und die Auswertung eines Längsbeschleunigungssignals, sowie einer Achsschlupffunktion, in der Getriebesteuerungseinrichtung deaktiviert wird. Realitätsnahe Prüfläufe, in denen der Fahrdynamikzustand des Fahrzeugs einfließen soll, lassen sich so aber nicht realisieren. Damit kann eher eine einfache Überprüfung des Fahrzeugs, wie beispielsweise in einer Werkstatt oder am Ende einer Fertigung (die sogenannte Bandende-überprüfung), realisiert werden.

Bei modernen Fahrzeugen wird häufig aber auch der Fahrdynamikzustand, insbesondere Beschleunigungen, wie Quer- oder Längsbeschleunigungen oder Gierraten, ausgewertet und zur Steuerung des Fahrzeugs oder von Teilsystemen des Fahrzeugs genutzt. Beispielhaft seien hier diverse Fahrassistenzsysteme, wie beispielsweise eine Fahrdynamikregelung ESP, oder die Momentenverteilung in Abhängigkeit vom Beschleunigungszustand in einem Allradsystem genannt. Auf einem Prüfstand fehlen aber naturgemäß solche Beschleunigungen, da das Fahrzeug, bzw. allgemein der Prüfling, während der Durchführung des Prüflaufs am Prüfstand still steht. Funktionen des Fahrzeugs, die vom Fahrdynamikzustand beeinflusst werden, lassen sich daher nicht ohne weiteres am Prüfstand testen.

Auch hierfür wurden schon Lösungen vorgeschlagen, wie beispielsweise in der WO 2011/151240 A1 beschrieben. Dabei werden Größen des Fahrdynamikzustandes in einem Modell simuliert und durch Emulation einzelner Signale in die Fahrzeugelektronik rückgeführt. Die Steuergeräte des Fahrzeugs verarbeiten damit keine von einem Sensor erfassten Messgrößen, sondern in einer externen Simulation berechnete und rückgeführte Werte. Das Problem dabei ist, dass dazu die realen Sensoren am Prüfstand entfernt, oder anderweitig deaktiviert, werden müssen, da den Steuergeräten ansonsten widersprüchliche und konkurrierende Sensorsignale zugeführt werden, was im besten Fall aufgrund fehlender Plausibilität wiederum zu einem Fehlerzustand führt. Abgesehen davon ist dieses Vorgehen auch ausgesprochen aufwendig und auch daher nachteilig.

Die US 2013/211691 A1 offenbart ein System zur Echtzeit-Simulation der Umgebung von Flugzeugmotoren, beispielsweise für Trainingszwecke einer Crew. Dabei kann mittels eines Computers bzw. Steuergeräts ein Motor so betrieben werden, dass Messwerte von Sensoren zur Regelung und zur Ansteuerung des Motors mittels Aktuatoren verwendet werden. Alternativ, z.B. wenn keine Sensoren vorhanden sind, können anstatt der Messwerte der Sensoren aber auch simulierte bzw. berechnete Werte herangezogen werden, die von einem Echtzeit-Simulator bereitgestellt werden. Das System ist in einem Flugzeug integriert und deshalb ungeeignet für die Anwendung an einem Prüfstand.

Die US 5 023 791 A offenbart eine Prüfeinheit für das Testen von Flugkontrollsystemen eines Flugzeugs. Das Flugzeug enthält eine Untereinheit, die mittels eines Wartungscomputers in einen Simulationsmodus geschaltet wird, in welchem reale Messwerte ignoriert und falsche Daten generiert werden.

In der DE 101 31 317 A1 wird ein Verfahren zum Testen eines Steuergeräts offenbart. Zum Testen wird ein Diagnosesteuergerät an einer Schnittstelle angeschlossen und ein Prüfprogramm aktiviert. Es werden nun statt den Messwerten der Sensoren virtuelle Testobjekte vom Diagnosesteuergerät an das Steuergerät gesendet, um die Funktion des Steuergeräts zu testen, da aufgabengemäß keine Sensoren angeschlossen sind. Die Ergebnisse der Steuerung durch den Mikroprozessor werden wieder an das Diagnosesteuergerät übertragen und es werden die End- oder Zwischenergebnisse in der Diagnosesteuergerät mit Sollwerten der virtuellen Testobjekte verglichen, um die Funktion des Steuergeräts zu testen. Die DE 101 31 317 A1 betrifft damit ein Verfahren zur Entwicklung eines Steuergeräts, aber keinen Prüfstand und/oder ein Verfahren zum Durchführen eines Prüfversuchs auf einem Prüfstand. Es ist daher eine Aufgabe der gegenständlichen Erfindung ein Verfahren, und einen entsprechenden Prüfstand, anzugeben, das auf einfache Weise die realitätsnahe Überprüfung eines Fahrzeugs oder eines Teilsystems des Fahrzeugs auf einem Prüfstand unter Berücksichtigung des Fahrdynamikzustandes ermöglicht.

Diese Aufgabe wird durch das Verfahren nach Anspruch 1 und die Vorrichtung nach Anspruch 3 gelöst.

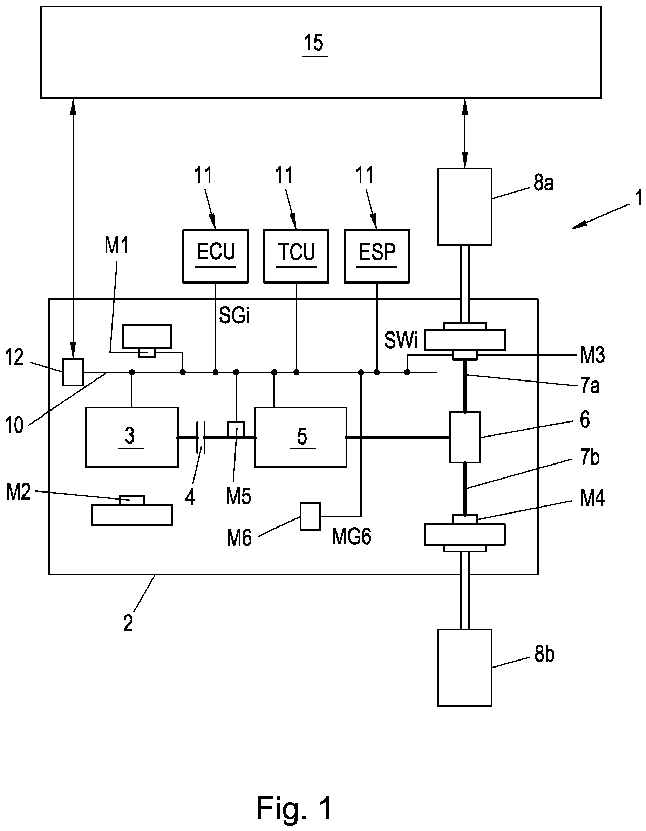

Diese Aufgabe wird erfindungsgemäß gelöst, indem die Steuereinheit zur Durchführung des Prüfversuchs in einen Prüfmodus geschaltet wird, Rechenwerte derselben Messgröße in einer Simulationseinheit berechnet werden und die Rechenwerte der Messgröße der Steuereinheit zusätzlich zu den erfassten Sensorwerten der Messgröße zugeführt werden und die Steuereinheit im Prüfmodus die erfassten Sensorwerte der Messgröße ignoriert und die Plausibilisierung der Rechenwerte der Messgrößen unterlässt. Damit ist kein Eingriff in die Messsensoren am Prüfstand notwendig. Die Messsensoren liefern ihre erfassten Sensorwerte einfach an die Steuereinheit, die allerdings erkennt, dass die Sensorwerte nicht verarbeitet werden dürfen. Stattdessen werden die Rechenwerte derselben Messgröße verarbeitet, die allerdings nicht plausibilisiert werden, um möglichen Fehlerzuständen am Prüfstand durch nicht plausible Werte der Messgröße zu verhindern. Auf diese Weise kann am Prüfstand auf einfache Weise ein realitätsnaher Prüfversuch realisiert werden, der insbesondere auch einen Fahrdynamikzustand des Fahrzeugs berücksichtigen kann. Damit können Funktionen am Prüfstand geprüft werden, die ansonsten nicht ohne weiteres getestet werden könnten. Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 ein Beispiel eine Prüfstandes mit einem Prüfling zum Durchführen eines Prüfversuchs,
Fig.2 und 3 erfindungsgemäße Ausgestaltungen einer Steuereinheit und deren Einbindung am Prüfstand

In Fig.1 ist ein Prüfstand 1 für einen Prüfling 2, hier ein Fahrzeug, in hinlänglich bekannter Anordnung dargestellt. Der Prüfling 2 umfasst ein Antriebsaggregat 3, hier z.B. einen Verbrennungsmotor, das über eine Kupplung 4 mit einem Getriebe 5 verbunden ist. Das Getriebe 5 ist mit einem Differenzial 6 verbunden, über das wiederum zwei Halbachsen 7a, 7b des Fahrzeugs 2 angetrieben werden. An den angetriebenen Halbachsen 7a, 7b des Fahrzeugs 2 sind Belastungsmaschinen 8a, 8b angeordnet. In gleicher Weise könnte als Prüfling 2 nur der Antriebsstrang vorgesehen sein, beispielsweise mit Verbrennungsmotor, Kupplung 4, Getriebe 5, Differenzial 6 und Halbachsen 7a, 7b, oder in beliebig anderer Konfiguration, insbesondere auch als Hybridantriebsstrang. Ebenso könnten die angetriebenen Fahrzeugräder auf Prüfstandrollen eines Rollenprüfstandes angeordnet sein.

Der Prüfling 2 umfasst weiters einen Fahrzeugbus 10, beispielsweise einen CAN-, LIN oder Flexray-Bus. Im Prüfling 2 sind ebenfalls in hinlänglich bekannter Weise eine Vielzahl von Messsensoren Mi, i=1,...,x angeordnet, die jeweils Sensorwerte SWi, i=1, ..., x bestimmter Messgrößen MGi, i=1,...,x erfassen. In Fig. 1 sind Messsensoren M1, M2, M3, M4, M5 und M6 dargestellt. Zusätzlich sind im Prüfling 2 auch eine Vielzahl von Steuereinheiten 11, beispielsweise eine Motorsteuereinheit ECU, eine Getriebesteuereinheit TCU und eine Fahrdynamikregelung ESP, vorgesehen, die in Fig.1 nur aus Gründen der Übersichtlichkeit außerhalb des Prüflings 2 dargestellt sind. Im gezeigten Ausführungsbeispiel übertragen die Messsensoren Mi die erfassten Sensorwerte SWi der Messgrößen MGi über den Fahrzeugbus 10. Vom Fahrzeugbus 10 können die Steuereinheiten 11, und gegebenenfalls auch andere Einheiten des Fahrzeugs 2, die Sensorwerte SWi der Messgrößen MGi auslesen und zur Durchführung einer bestimmten, vorgesehenen Funktion, beispielsweise das Einstellen einer Drosselklappenstellung oder Einspritzmenge des Verbrennungsmotors, oder ein Gangwechsel, oder ein Bremseingriff, usw., verarbeiten. In gleicher Weise übertragen die Steuereinheiten 11 im gezeigten Ausführungsbeispiel Steuergrößen SGi, i=1,...,y für bestimmte Fahrzeugkomponenten über den Fahrzeugbus 10, von dem die Fahrzeugkomponenten die Steuergrößen SGi auslesen und verarbeiten. Es könnte aber auch vorgesehen sein, dass bestimmte Messsensoren Mi direkt mit bestimmten Steuereinheiten 11 und/oder bestimmte Steuereinheiten 11 direkt mit zugehörigen Fahrzeugkomponenten verbunden sind und nicht über den Fahrzeugbus 10.

In Fig.1 sind nur beispielhaft einige Messsensoren Mi und Steuereinheiten 11 dargestellt. Selbstverständlich können in einem Fahrzeug viele weitere und/oder auch andere Messsensoren Mi und Steuereinheiten 11 vorgesehen sein, was für die nachfolgende Beschreibung der Erfindung aber unerheblich ist.

Zusätzlich ist am Prüfstand 1 eine Prüfstandautomatisierungseinheit 15 vorgesehen, die den Prüflauf am Prüfstand 1 steuert. Die Prüfstandautomatisierungseinheit 15 steuert insbesondere die Belastungsmaschine(n) 8a, 8b und auch den Prüfling 2, in Form des Fahrzeugs oder einer Fahrzeugkomponente. Dazu kann die Prüfstandautomatisierungseinheit 15 mit den Belastungsmaschinen 8a, 8b verbunden sein. Ebenso ist die Prüfstandautomatisierungseinheit 15 zu diesem Zweck mit dem Prüfling 2 verbunden, beispielsweise über eine herkömmliche Fahrzeugdiagnoseschnittstelle 12, die wiederum mit dem Fahrzeugbus 10 verbunden ist. Die Prüfstandautomatisierungseinheit 15 könnte auch mit anderen Aktoren am Prüfstand 1, wie beispielsweise mit einem Fahrroboter zum Betätigen der Pedale, der Lenkung oder des Getriebes, verbunden sein. Die Prüfstandautomatisierungseinheit 15 kann aber auch über den Fahrzeugbus 10 Steuerbefehle an die jeweiligen Steuereinheiten 11 übertragen, wie beispielsweise eine Fahrpedalstellung an die Motorsteuereinheit ECU.

In einem Fahrzeug erwartet jede Steuereinheit 11 bestimmte Messgrößen MGi. Bleiben diese Messgrößen MGi während des Betriebs des Fahrzeugs aus, so wird von einem Fehlerzustand ausgegangen. Ebenso ist es üblich, dass die Steuereinheiten 11 erhaltene Sensorwerte SWi von Messgrößen MGi in einem Normalmodus der Steuereinheit 11 plausibilisieren (im Sinne von auf Richtigkeit oder Vertrauenswürdigkeit prüfen), gegebenenfalls auch unter Zuhilfenahme von anderen Sensorwerten anderer Messgrößen MGi. Als Beispiel sei eine plausible Kombination aus den Signalen eines Beschleunigungssensors, des Lenkwinkels und der Fahrzeug-Gierrate genannt. Eine Plausibilisierung kann für jede Messgröße MGi unterschiedlich ablaufen. Allgemein weiß man aber von welchen anderen Messgrößen MGi und/oder Steuergrößen SGi eine bestimmte Messgröße abhängig ist und welche Sensorwerte SWi die Messgröße MGi, gegebenenfalls in Abhängigkeit anderer Messgrößen MGi oder Steuergrößen SGi, einnehmen kann. Die Plausibilisierung ist normalerweise fix in der Steuereinheit 11 implementiert. Kann ein Sensorwert SWi nicht plausibilisiert werden, löst auch das in der Regel einen Fehlerzustand aus. Solche Fehlerzustände sind während der Prüfung des Fahrzeugs 2 am Prüfstand 1 unerwünscht, weil das eine realitätsnahe Prüfung des Fahrzeugs 2, zumindest für bestimmte Funktionen des Fahrzeugs 2, unmöglich macht oder erschwert.

Insbesondere fehlen am Prüfstand naturgemäß Messgrößen MGi des Fahrdynamikzustandes des Prüflings 2, also vor allem aktuelle Beschleunigungen, wie Längs- Querbeschleunigung, Gierrate, die mit einer Anzahl von Messsensoren M6 für die Fahrdynamik erfasst werden. Aber auch Messgrößen MGi von Fahrzeugsteuereinrichtungen, wie z.B. ein Lenkeinschlag, fehlen typischerweise am Prüfstand 1. In gleicher Weise können auch Messgrößen MG1, MG2, z.B. Drehzahlen, von Messsensoren M1, M2 von nicht angetriebenen Achsen des Fahrzeugs 2 fehlen. Solche fehlenden Sensorwerte SWi bestimmter Messgrößen MGi führen im Verbund der Steuereinheiten 11 aber zu Problemen oder zu einem nicht erwünschten Verhalten. Beispielsweise reagiert eine Fahrdynamikregelung ESP bei einer Geradeausfahrt (Lenkeinschlag Null) anders, als bei einem bestimmten Lenkeinschlag. Eine Drehzahl Null einer Achse kann der Fahrdynamikregelung ESP ein blockierendes Rad signalisieren, mit einer entsprechenden unerwünschten Reaktion der Fahrdynamikregelung ESP am Prüfstand 1. Bestimmte Funktionen des Prüflings 2 können am Prüfstand 1 ohne entsprechende Messgrößen MGi überhaupt nicht geprüft werden. Beispielsweise Funktionen, die vom Fahrdynamikzustand des Fahrzeugs 2 abhängig sind, wie beispielsweise eine Fahrdynamikregelung ESP, eine Momentenverteilung in einem Allradfahrzeug oder die Steuerung eines Hybridantriebsstranges, lassen sich aus diesen Gründen auf einem herkömmlichen Prüfstand 1 nicht ohne weiteres testen. Hier soll die Erfindung Abhilfe schaffen, wie nachfolgend beschrieben wird.

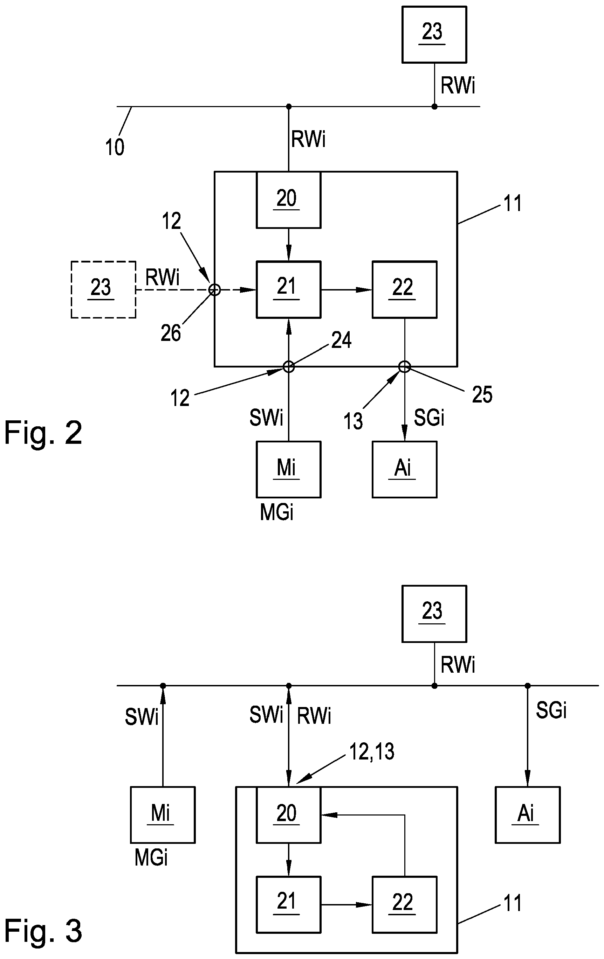

Im Ausführungsbeispiel nach Fig.2 erhält eine Steuereinheit 11 über einen Dateneingang 12 von einem damit verbundenen Messsensor Mi erfasste Sensorwerte SWi einer bestimmten Messgröße MGi. Der Dateneingang 12 kann ein Sensoreingang 24 sein, an dem der Messsensor Mi direkt angeschlossen werden kann. In einer Plausibilisierungseinheit 21 werden die Sensorwerte SWi plausibilisiert und, falls plausibel, in einer Berechnungseinheit 22 gemäß einer vorgesehenen Funktion der Steuereinheit 11 verarbeitet. Die Steuereinheit 11 berechnet eine Steuergröße SGi, die an einem Datenausgang 13 der Steuereinheit 11 ausgegeben werden kann. Der Datenausgang 13 kann ein Steuerausgang 25 der Steuereinheit 11 sein, an dem ein zugeordneter Aktor Ai des Fahrzeugs 2 angeschlossen werden kann. Der Aktor Ai wird mit der ausgegebenen Steuergröße SGi gesteuert. Die Plausibilisierungseinheit 21 und die Berechnungseinheit 22 könnten dabei natürlich auch in einer einzigen Einheit implementiert sein und können in Form von Hardware und/oder Software ausgeführt sein. Das Ausführungsbeispiel nach der Fig.3 entspricht dem der Fig.2 mit dem einzigen Unterschied, dass die Steuereinheit 11 über eine Kommunikationseinheit 20 an den Fahrzeugbus 10 angeschlossen ist und über den Fahrzugbus 10 und die Kommunikationseinheit 20 die Sensorwerte SWi empfängt und die Steuergrößen SGi überträgt. Der Dateneingang 12 und der Datenausgang 13 der Steuereinheit 11 wird daher durch die Kommunikationseinheit 20 zur Anbindung der Steuereinheit 11 an den Fahrzeugbus 10 ausgebildet.

Liefert der Messsensor Mi keine oder für den Prüfversuch falsche Sensorwerte SWi der Messgröße MGi, was in der Plausibilisierungseinheit 21 festgestellt wird, könnte das den durchzuführenden Prüfversuch stören oder sogar unmöglich machen. Es ist daher erfindungsgemäß vorgesehen, dass in einer Simulationseinheit 23 berechnete Rechenwerte RWi der Messgröße MGi ermittelt werden. Die Simulationseinheit 23 kann dabei auch in der Prüfstandautomatisierungseinheit 15 implementiert sein. Das kann beispielsweise anhand einer Simulation der Bewegung des Fahrzeugs, die insbesondere den Fahrdynamikzustand des Fahrzeugs umfasst, nach den Vorgaben des Prüfversuchs erfolgen. Die Simulation kann beispielsweise anhand geeigneter Simulationsmodellen erfolgen und kann auch andere erfasste Sensorwerte SWi, die beispielsweise über den Fahrzeugbus 10 übertragen werden, verarbeiten. Auf diese Weise können am Prüfstand 1 Rechenwerte RWi von Messgrößen MGi wie Beschleunigungen, Lenkeinschlag, Raddrehzahlen, etc. ermittelt werden, die bei einer realen Fahrt des Fahrzeugs auftreten würden, die am Prüfstand 1 aber nicht erfasst werden können. Diese Rechenwerte RWi werden ebenfalls der Steuereinheit 11 über den Dateneingang 12 zugeführt. Vorzugsweise über den Fahrzeugbus 10, mit dem die Simulationseinheit 23 verbunden ist, und der Kommunikationseinheit 20. Die Rechenwerte RWi könnten der Steuereinheit 11 aber auch direkt über einen vorgesehenen zweiten Sensoreingang 26 der Steuereinheit 11 als Dateneingang 12 zugeführt werden, wie in Fig.2 angedeutet. Das würde aber eine direkte Verbindung der Simulationseinheit 23 mit dem zweiten Sensoreingang 24 notwendig machen. Die Steuereinheit 11 erhält damit gleichzeitig mit dem Messsensor Mi erfasste Sensorwerte SWi der Messgröße MGi und berechnete Rechenwerte RWi derselben Messgröße MGi. Derart konkurrierende und in der Regel widersprüchliche Werte derselben Messgröße MGi würden in der Plausibilitätsprüfung in der Plausibilisierungseinheit 21 auffallen und würden zu einem unerwünschten Fehlerzustand führen.

Um das zu verhindern, ist vorgesehen, dass die Steuereinheit 11 für den Prüfversuch am Prüfstand 1 in einen Prüfmodus geschalten wird. Das kann beispielsweise durch eine vorgegebene, nur dem Fahrzeughersteller bekannte Kombination bestimmter Bedienelemente des Prüflings 2 oder durch Setzen eines bestimmten Codierungswertes in einer Diagnosesoftware erfolgen. In gleicher Weise könnte das auch durch einen speziellen Befehl erfolgen, der von der Prüfstandautomatisierungseinheit 15 über die Fahrzeugdiagnoseschnittstelle 12 auf dem Fahrzeugbus 10 übertragen und von allen verbundenen Steuereinheiten 11 gelesen wird.

Im Prüfmodus ist die Steuereinheit 11 instruiert, für die Umsetzung der vorgesehenen Funktion der Steuereinheit 11 die vom Messsensor Mi erhaltenen Sensorwerte SWi der Messgröße MGi zu ignorieren und stattdessen die Rechenwerte RWi der Messgröße MGi für die Ermittlung der Steuergröße SGi zu verarbeiten. Dazu kann beispielsweise vorgesehen sein, dass die Rechenwerte RWi von der Simulationseinheit 23 in speziellen Nachrichten am Fahrzeugbus 10 übertragen werden, um der Steuereinheit 11 eine Unterscheidung der Sensorwerte SWi von den Rechenwerten RWi zu ermöglichen. Auf diese Weise ist es nicht notwendig, dass der Messsensor Mi vom Fahrzeugbus 10 oder von der Steuereinheit 11 abhängt oder anderweitig deaktiviert wird. Es sind damit keine Eingriffe am Prüfling 2 am Prüfstand 1 erforderlich.

Um möglichen in der Steuereinheit 11 vorgesehenen Plausibilisierungsüberprüfungen vorzubeugen, wird die Steuereinheit 11 im Prüfmodus gleichzeitig die Plausibilisierung der Rechenwerte RWi unterlassen und wird den erhaltenen Rechenwerten RWi vertrauen. "Unterlassen" kann dabei bedeuten, dass eine Plausibilisierung überhaupt nicht durchgeführt wird, oder dass das Ergebnis der Plausibilisierung ignoriert wird. Würde die Steuereinheit 11 die Rechenwerte RWi der Messgröße MGi beispielsweise mit anderen, real am Prüfstand 1 erfassten Sensorwerten SWi anderer Messgrößen MGi (die z.B. am Fahrzeugbus 10 übertragen werden) plausibilisieren, dann könnten die Rechenwerte RWi einer solchen Überprüfung unter Umständen nicht stand halten, was wiederum zu einem Fehlerzustand führen könnte. Dem kann nun durch den Prüfmodus vorgebeugt werden.

Obwohl das erfindungsgemäße Vorgehen nur anhand einer Messgröße MGi beschrieben wurde, kann das Verfahren natürlich gleichzeitig auf mehrere und auch verschiedene Messgrößen MGi angewendet werden. Ebenso kann eine Steuereinheit 11 auch mehrere Sensorwerte SWi bzw. Rechenwerte RWi verarbeiten und/oder mehrere Steuergrößen SGi berechnen und ausgeben.

Die Software der Steuereinheit 11 ist entsprechend anzupassen, um einen solchen Prüfmodus am Prüfstand 1 zu ermöglichen. Das kann auch in einer Serienversion der Steuereinheit 11, die in einem Serienfahrzeug zum Einsatz kommt, der Fall sein. Gegebenenfalls könnte auch vorgesehen sein, dass die Steuereinheit 11 oder die Software der Steuereinheit 11 am Prüfstand 1 einfach getauscht wird, um am Prüfstand 1 mit einer Steuereinheit 11 mit Prüfmodus arbeiten zu können.

## Patentansprüche

1. Verfahren zum Durchführen eines Prüfversuchs auf einem Prüfstand (1) für einen Prüfling (2), wobei am Prüfling (2) zumindest ein Messsensor (Mi) angeordnet ist, der Sensorwerte (SWi) einer Messgröße (MGi) erfasst, die einer Steuereinheit (11) des Prüflings (2) zugeführt werden und in der die erfassten Sensorwerte (SWi) der Messgröße (MGi) in Abhängigkeit einer Plausibilisierung der erfassten Sensorwerte (SWi) der Messgröße (MGi) zum Steuern einer Funktion des Prüflings (2) verarbeitet werden, wobei die Steuereinheit (11) zur Durchführung des Prüfversuchs in einen Prüfmodus geschaltet wird, wobei Rechenwerte (RWi) derselben Messgröße (MGi) in einer Simulationseinheit (23) berechnet werden und die Rechenwerte (RWi) der Messgröße (MGi) der Steuereinheit (11) zusätzlich zu den erfassten Sensorwerten (SWi) der Messgröße (MGi) zugeführt werden und wobei die Steuereinheit (11) im Prüfmodus die erfassten Sensorwerte (SWi) der Messgröße (MGi) ignoriert und die Plausibilisierung der Rechenwerte (RWi) der Messgrößen (MGi) unterlässt.

2. Verfahren nach Anspruch 1, **dadurch gekennzeichnet, dass** die Rechenwerte (RWi) der Steuereinheit (11) über einen damit verbundenen Fahrzeugbus (10) zugeführt werden.

3. Prüfstand zum Durchführen eines Prüfversuchs mit einem Prüfling (2) mit einer Steuereinheit (11), wobei am Prüfling (2) zumindest ein Messsensor (Mi) angeordnet ist, der Sensorwerte (SWi) einer Messgröße (MGi) erfasst und der Steuereinheit (11) zuführt, wobei in der Steuereinheit (11) eine Plausibilisierungseinheit (21) vorgesehen ist, in der die Sensorwerte (SWi) in einem Normalmodus plausibilisiert werden, und die Steuereinheit (11) die erfassten Sensorwerte (SWi) der Messgröße (MGi) in Abhängigkeit der Plausibilisierung zum Steuern einer Funktion des Prüflings (2) verarbeitet, **dadurch gekennzeichnet, dass** in der Steuereinheit (11) zur Durchführung des Prüfversuchs ein Prüfmodus implementiert ist, **dass** am Prüfstand (1) eine Simulationseinheit (23) vorgesehen ist, die Rechenwerte (RWi) derselben Messgröße (MGi) berechnet und der Steuereinheit (11) zusätzlich zu den erfassten Sensorwerten (SWi) der Messgröße (MGi) zuführt **und dass** die Steuereinheit (11) im Prüfmodus die erfassten Sensorwerte der Messgröße (MGi) ignoriert und die Plausibilisierungseinheit die Plausibilisierung der Rechenwerte der Messgröße (MGi) unterlässt.

4. Prüfstand nach Anspruch 3, **dadurch gekennzeichnet, dass** die Steuereinheit (11) und die Simulationseinheit (23) mit einem Fahrzeugbus (10) verbunden sind und die Simulationseinheit (23) die Rechenwerte (RWi) der Messgröße (MGi) über den Fahrzeugbus (10) an die Steuereinheit (11) überträgt.

5. Prüfstand nach Anspruch 3 oder 4, **dadurch gekennzeichnet, dass** der Prüfling (2) ein Fahrzeug ist, dass die Steuereinheit (11) einen Dateneingang (12) aufweist, über den im Betrieb des Fahrzeugs ein mit einem Messsensor (Mi) des Fahrzeugs erfasster Sensorwert (SWi) einer Messgröße (MGi) zuführbar ist, wobei die Steuereinheit (11) die erfassten Sensorwerte (SWi) der Messgröße (MGi) in Abhängigkeit der Plausibilisierung zu einer Steuergröße (SGi) zum Steuern einer Funktion des Fahrzeugs oder einer Fahrzeugkomponente verarbeitet, und mit einem Datenausgang (13), über den im Betrieb des Fahrzeugs die Steuergröße (SGi) ausgebbar ist wobei die Steuereinheit (11) im Prüfmodus die über den Dateneingang (12) zugeführten erfassten Sensorwerte (SWi) der Messgröße (MGi) ignoriert und die über den Dateneingang (12) zugeführten berechneten Rechenwerte (RWi) derselben Messgröße (MGi) verarbeitet, ohne die Rechenwerte (RWi) der Messgröße (MGi) in der Plausibilisierungseinheit (21) zu plausibilisieren.

## Claims

1. A method for carrying out a test run on a test bench (1) for a test specimen (2), at least one measuring sensor (Mi) being arranged on the test specimen (2), which sensor detects sensor values (SWi) of a measured quantity (MGi) that are supplied to a control unit (11) of the test specimen (2), and in which control unit (11) the detected sensor values (SWi) of the measured quantity (MGi) are processed in accordance with a plausibility check of the detected sensor values (SWi) of the measured quantity (MGi) in order to control a function of the test specimen (2), wherein the control unit (11) is switched into a testing mode for carrying out the test run, wherein calculated values (RWi) of the same measured quantity (MGi) are calculated in a simulation unit (23) and the calculated values (RWi) of the measured quantity (MGi) are supplied to the control unit (11) in addition to the detected sensor values (SWi) of the measured quantity (MGi), and wherein, in testing mode, the control unit (11) ignores the detected sensor values (SWi) of the measured quantity (MGi) and omits the plausibility check of the calculated values (RWi) of the measured quantities (MGi).

2. The method according to claim 1, **characterized in that** the calculated values (RWi) are supplied to the control unit (11) via a vehicle bus (10) connected thereto.

3. A test bench for carrying out a test run using a test specimen (2) comprising a control unit (11), at least one measuring sensor (Mi) being arranged on the test specimen (2), which sensor detects sensor values (SWi) of a measured quantity (MGi) and supplies said values to the control unit (11), a plausibility check unit (21), in which the plausibility of the sensor values (SWi) is checked in a normal mode, being provided in the control unit (11), and the control unit (11) processing the detected sensor values (SWi) of the measured quantity (MGi) in accordance with a plausibility check in order to control a function of the test specimen (2), **characterized in that** a testing mode is implemented in the control unit (11) in order to carry out the test run, **in that** a simulation unit (23) is provided on the test bench (1), which simulation unit (23) calculates calculated values (RWi) of the same measured quantity (MGi) and supplies said values to the control unit (11) in addition to the detected sensor values (SWi) of the measured quantity (MGi), **and in that**, in testing mode, the control unit (11) ignores the detected sensor values (SWi) of the measured quantity (MGi) and omits the plausibility check of the calculated values of the measured quantities (MGi).

4. The test bench according to claim 3, **characterized in that** the control unit (11) and the simulation unit (23) are connected to a vehicle bus (10) and the simulation unit (23) transmits the calculated values (RWi) of the measured quantity (MGi) to the control unit (11) via the vehicle bus (10).

5. The test bench according to claim 3 or 4, **characterized in that** the test specimen (2) is a vehicle, **in that** the control unit comprises a data input (12) via which a sensor value (SWi) of a measured quantity (MGi) detected by a measuring sensor (Mi) of the vehicle can be supplied during operation of the vehicle, wherein the control unit (11) processes the detected sensor values (SWi) of the measured quantity (MGi), depending on the plausibility check, into a controlled variable (SGi) for controlling a function of the vehicle or a vehicle component, and comprising a data output (13) via which the controlled variable (SGi) can be output during operation of the vehicle, in testing mode the control unit (11) ignoring the detected sensor values (SWi) of the measured quantity (MGi) supplied via the data input (12) and processing computed controlled variables (RWi) of the same measured quantity (MGi) supplied via the data input (12), without checking the plausibility of the calculated values (RWi) of the measured quantity (MGi) in the plausibility check unit (21).

## Revendications

1. Procédé permettant de réaliser un essai sur un banc d'essai (1) pour un échantillon d'essai (2), dans lequel au moins un capteur de mesure (Mi) est disposé sur l'échantillon d'essai (2), lequel capteur détecte des valeurs de capteur (SWi) d'une grandeur de mesure (MGi) qui sont transmises à une unité de commande (11) de l'échantillon d'essai (2) et dans laquelle unité les valeurs de capteur (SWi) détectées de la grandeur de mesure (MGi) sont traitées en fonction d'un contrôle de la plausibilité des valeurs de capteur (SWi) détectées de la grandeur de mesure (MGi) pour la commande d'une fonction de l'échantillon d'essai (2), dans lequel l'unité de commande (11) est commutée dans un mode d'essai pour la réalisation de l'essai,
dans lequel des valeurs de calcul (RWi) de la même grandeur de mesure (MGi) sont calculées dans une unité de simulation (23) et les valeurs de calcul (RWi) de la grandeur de mesure (MGi) sont transmises à l'unité de commande (11) en plus des valeurs de capteur (SWi) détectées de la grandeur de mesure (MGi) et dans lequel l'unité de commande (11), dans le mode d'essai, ignore les valeurs de capteur (SWi) détectées de la grandeur de mesure (MGi) et omet le contrôle de la plausibilité des valeurs de calcul (RWi) des grandeurs de mesure (MGi).

2. Procédé selon la revendication 1, **caractérisé en ce que** les valeurs de calcul (RWi) sont transmises à l'unité de commande (11) par l'intermédiaire d'un bus de véhicule (10) connecté à celle-ci.

3. Banc d'essai permettant de réaliser un essai, comportant un échantillon d'essai (2) comportant une unité de commande (11), dans lequel au moins un capteur de mesure (Mi) est disposé sur l'échantillon d'essai (2), lequel capteur détecte des valeurs de capteur (SWi) d'une grandeur de mesure (MGi) et les transmet à l'unité de commande (11), dans lequel une unité de contrôle de la plausibilité (21) est prévue dans l'unité de commande (11), dans laquelle unité de contrôle de la plausibilité les valeurs de capteur (SWi) sont soumises à un contrôle de la plausibilité dans un mode normal, et l'unité de commande (11) traite les valeurs de capteur (SWi) détectées de la grandeur de mesure (MGi) en fonction du contrôle de la plausibilité pour la commande d'une fonction de l'échantillon d'essai (2), **caractérisé en ce qu'**un mode d'essai est mis en oeuvre dans l'unité de commande (11) pour la réalisation de l'essai, **en ce qu'**une unité de simulation (23) est prévue sur le banc d'essai (1), laquelle calcule des valeurs de calcul (RWi) de la même grandeur de mesure (MGi) et les transmet à l'unité de commande (11) en plus des valeurs de capteur (SWi) détectées de la grandeur de mesure (MGi) **et en ce que** l'unité de commande (11), dans le mode d'essai, ignore les valeurs de capteur détectées de la grandeur de mesure (MGi) et l'unité de contrôle de la plausibilité omet le contrôle de la plausibilité des valeurs de calcul de la grandeur de mesure (MGi).

4. Banc d'essai selon la revendication 3, **caractérisé en ce que** l'unité de commande (11) et l'unité de simulation (23) sont connectées à un bus de véhicule (10) et l'unité de simulation (23) transfère les valeurs de calcul (RWi) de la grandeur de mesure (MGi) à l'unité de commande (11) par l'intermédiaire du bus de véhicule (10).

5. Banc d'essai selon la revendication 3 ou 4, **caractérisé en ce que** l'échantillon d'essai (2) est un véhicule, **en ce que** l'unité de commande (11) présente une entrée de données (12), par l'intermédiaire de laquelle une valeur de capteur (SWi), détectée par un capteur de mesure (Mi) du véhicule, d'une grandeur de mesure (MGi) peut être transmise pendant le fonctionnement du véhicule, dans lequel l'unité de commande (11) traite les valeurs de capteur (SWi) détectées de la grandeur de mesure (MGi), en fonction du contrôle de la plausibilité, en une grandeur de commande (SGi) pour la commande d'une fonction du véhicule ou d'un composant de véhicule, et comportant une sortie de données (13), par l'intermédiaire de laquelle la grandeur de commande (SGi) peut être émise pendant le fonctionnement du véhicule, dans lequel l'unité de commande (11), dans le mode d'essai, ignore les valeurs de capteur (SWi), détectées et transmises par l'intermédiaire de l'entrée de données (12), de la grandeur de mesure (MGi) et traite les valeurs de calcul (RWi), calculées et transmises par l'intermédiaire de l'entrée de données (12), de la même grandeur de mesure (MGi), sans contrôler la plausibilité des valeurs de calcul (RWi) de la grandeur de mesure (MGi) dans l'unité de contrôle de la plausibilité (21).
